# EUROPÄISCHE PATENTSCHRIFT

(11) **EP 3 825 572 B1**
(45) Veröffentlichungstag und Bekanntmachung des Hinweises auf die Patenterteilung: **28.08.2024**
(21) Anmeldenummer: 20202621.7
(22) Anmeldetag: 19.10.2020
(51) Int. Cl.: F16F 9/04

(54) **LUFTFEDER MIT EINEM BESONDEREN ANSCHLUSSTEIL**
AIR SPRING WITH A SPECIAL CONNECTOR
RESSORT PNEUMATIQUE DOTÉ D'UNE PIÈCE DE RACCORDEMENT SPÉCIALE

(30) Priorität: 22.11.2019 DE 102019218018
(43) Veröffentlichungstag der Anmeldung: 26.05.2021
(73) Patentinhaber: ContiTech Deutschland GmbH, 30175 Hannover (DE)
(72) Erfinder: Kolle, Christian - c/o Continental AG, 30419 Hannover (DE)
(74) Vertreter: Continental Corporation

(56) Entgegenhaltungen:
- US-A- 3 044 761
- US-A1- 2008 143 027
- US-B2- 7 404 547

## Beschreibung

Die Erfindung betrifft eine Luftfeder mit einem schlauchförmigen, aus einem elastomeren Werkstoff bestehenden Federbalg, welcher an seinem oberen Endabschnitt druckdicht an einem oberen Anschlussteil und mit seinem unteren Endabschnitt an einem unteren Anschlussteil befestigt ist, wobei mindestens eines der Anschlussteile als eine vor der Montage topfförmige, aus einem Blech hergestellte Bördelplatte ausgebildet ist, welche einen ebenen Deckelboden und einen daran radial außen ausgebildeten sowie nach radial innen umgebogenen Deckelrand aufweist, wobei der Deckelrand bei der Montage der Luftfeder unter Einschluss eines endseitigen Ringwulstes des Federbalgs und Andrücken des Endabschnittes an eine Dichtfläche des Anschlussteils torusförmig nach innen umgebördelt ist.

Luftfedern werden in vielfältigen Anwendungen zur Federung und Dämpfung eingesetzt. In Fahrzeugen, wie Kraftfahrzeugen, Schienenfahrzeugen und Kabinenbahnen, sind Luftfedern jeweils zwischen einem Bauteil einer Fahrzeugachse, wie einem Achsträger, einem Querlenker oder einem Längslenker, und einem tragenden Bauteil einer Fahrzeugkarosserie, wie einem Fahrzeugrahmen oder einem Karosserieholm, angeordnet und dienen zu Abfederung des jeweiligen Fahrzeugaufbaus gegen Unebenheiten der Fahrbahn oder des Gleises. Bei stationären Maschinen, Industrieanlagen und Gebäudeteilen sind Luftfedern jeweils zwischen einem Boden oder einem Fundament und einer tragenden Basis einer Maschine angeordnet und dienen als pneumatisch aktive Elemente zur Schwingungsisolierung der jeweiligen Maschine, Anlage oder des Gebäudeteils gegen Erschütterungen des Bodens.

Hinsichtlich der Ausführungen ihrer Federbälge werden Luftfedern in zwei Bauarten eingeteilt. In einer ersten Bauart von Luftfedern ist der Federbalg als ein Faltenbalg mit mindestens einer ringförmigen Falte ausgeführt, durch die zwei wulstförmige Abschnitte des Federbalgs miteinander verbunden sind. Bei einer derartigen Luftfeder können die beiden Endabschnitte des Federbalgs jeweils mit einem als Bördelplatte ausgebildeten Anschlussteil verbunden sein. Bei einer zweiten Bauart von Luftfedern ist der Federbalg als ein Rollbalg mit einer meistens unten angeordneten Rollfalte ausgebildet, dessen zugeordneter Endabschnitt an einem Abrollkolben oder an einem mit diesem verbundenen Aufnahmestück befestigt ist und beim Ein- und Ausfedern der Luftfeder an der Außenwand des Abrollkolbens abrollt. Bei einer derartigen Luftfeder kann der zu dem Abrollkolben ferne Endabschnitt des Federbalgs, vorliegend beispielhaft der obere Endabschnitt des Federbalgs, mit einem als Bördelplatte ausgebildeten Anschlussteil verbunden sein.

Eine gattungsgemäße Luftfeder, bei der zumindest ein Endabschnitt des Federbalgs, hier der obere Endabschnitt des Federbalgs, mit einem als Bördelplatte ausgebildeten Anschlussteil verbunden ist, ist aus der DE 41 41 156 A1 bekannt. Die Bördelplatte ist zur Befestigung der Luftfeder an einem Fahrzeugaufbau mit zwei Gewindebolzen und zum Anschluss einer Druckluftleitung mit einer Gewindebohrung versehen. Zur Vermeidung von Ermüdungsrissen im Bereich der eingeschweißten Bolzenköpfe der Gewindebolzen sind die Befestigungsbohrungen der Gewindebolzen jeweils mittig in einer muldenartigen Vertiefung der Bördelplatte angeordnet.

Eine Werkzeuganordnung und ein Verfahren zum Umbördeln des Deckelrandes einer Bördelplatte bei der Montage einer Luftfeder sind in der DE 103 55 441 A1 ausführlich beschrieben. Bei einem derartigen Bördelvorgang steigen die über die Formwerkzeuge einzuleitenden Kräfte mit der Blechdicke der Bördelplatte überproportional an, weil der Deckelrand dabei umfangsseitig gestaucht wird. Andererseits ist mit zunehmender Größe, insbesondere mit zunehmendem Durchmesser einer Luftfeder eine größere Dicke der Bördelplatte erforderlich, um eine ausreichende Stabilität der Deckelplatte gegen ein Ausbeulen nach innen oder außen zu erreichen.

Um beim Bördelvorgang einen Materialfluss aus dem Deckelrand in den Deckelboden, der zu einem Ausbeulen des Deckelbodens führen würde, zu vermeiden, greifen beim Umbördeln des Deckelrandes üblicherweise scharfkantige Halterillen eines oberen Bördelwerkzeugs im Bereich des Übergangs zwischen dem Deckelrand und dem Deckelboden in die Außenwand der Bördelplatte ein, wodurch jedoch eine zuvor durch eine Verzinkung oder eine Lackierung aufgebrachte Korrosionsschutzschicht durchdrungen und somit beschädigt werden kann. Zur Vermeidung dieses Nachteils ist gemäß der DE 103 55 441 A1 vorgesehen, dass die Bördelplatte im Bereich des Übergangs zwischen dem Deckelrand und dem Deckelboden außen mit einer umlaufenden gerundeten Haltesicke versehen ist, in die beim Umbördeln des Deckelrandes eine entsprechend geformte Halterille des oberen Bördelwerkzeugs eingreift.

In der DE 44 23 885 A1 ist dagegen zur Reduzierung der beim Umbördeln des Deckelrandes einer Bördelplatte einzuleitenden Kräfte vorgesehen, den Deckelrand mit umfangsseitig verteilt angeordneten radialen Schlitzen zu versehen, die derart ausgebildet und angeordnet sind, dass der Deckelrand nach dem Umbördeln einen geschlossenen Kragen bildet. In einer zweiten in der DE 44 23 885 A1 vorgeschlagenen Ausführungsform einer Bördelplatte ist diese im Bereich eines den Deckelrand umfassenden Plattenrandes mit einer geringeren Dicke ausgeführt. Bei beiden Ausführungen der Bördelplatte ist das Umbördeln des Deckelrandes insbesondere bei einer Bördelplatte mit größerer Wandstärke durch die Verringerung der dabei einzuleitenden Kräfte vereinfacht. Andererseits ist der Arbeits- und Kostenaufwand für die Herstellung der Bördelplatte durch das Ausschneiden der Schlitze aus dem Deckelrand oder das Auswalzen des Plattenrandes deutlich erhöht.

Der vorliegenden Erfindung lag daher die Aufgabe zugrunde, eine Luftfeder der eingangs genannten Bauart mit einer einfach und kostengünstig herstellbaren Bördelplatte vorzustellen, bei welcher das Umbördeln des Deckelrandes unabhängig von der Größe der Luftfeder relativ einfach durchführbar ist.

Diese Aufgabe ist durch eine Luftfeder mit den Merkmalen des Anspruchs 1 gelöst. Die davon abhängigen Ansprüche definieren vorteilhafte Weiterbildungen dieser Luftfeder.

Demnach betrifft die Erfindung eine Luftfeder mit einem schlauchförmigen, aus einem elastomeren Werkstoff bestehenden Federbalg, welcher an seinem oberen Endabschnitt druckdicht an einem oberen Anschlussteil und mit seinem unteren Endabschnitt an einem unteren Anschlussteil befestigt ist, wobei mindestens eines der Anschlussteile als eine vor der Montage topfförmige, aus einem Blech hergestellte Bördelplatte ausgebildet ist, welche einen ebenen Deckelboden und einen daran radial außen ausgebildeten sowie nach radial innen umgebogenen Deckelrand aufweist, wobei der Deckelrand bei der Montage der Luftfeder unter Einschluss eines endseitigen Ringwulstes des Federbalgs und Andrücken des Endabschnittes an eine Dichtfläche des Anschlussteils torusförmig nach innen umgebördelt ist.

Zur Lösung der gestellten Aufgabe ist bei dieser Luftfeder vorgesehen, dass die Bördelplatte in ihrem Deckelboden eine zentrisch angeordnete kreisförmig Öffnung aufweist, dass ein kreisscheibenförmiger Deckeleinsatz einen radial außen ausgebildeten und nach axial innen abgesetzten ringscheibenförmigen Absatzrand aufweist, und dass der Deckeleinsatz unter Anliegen seines Absatzrandes an der axialen Innenwand des Deckelbodens von axial innen formschlüssig in die Öffnung der Bördelplatte eingesetzt ist.

Durch die zweiteilige Ausführung des Anschlussteils mit einer Bördelplatte und einem in die Öffnung der Bördelplatte eingesetzten Deckeleinsatz können die Bördelplatten für unterschiedliche Größen von Luftfedern mit gleichbleibend geringer Wandstärke ausgebildet werden, wodurch das Umbördeln des jeweiligen Deckelrandes bei der Montage der Luftfedern mit vergleichsweise niedrigen Umform- und Haltekräften durchführbar ist.

Die Anpassung der Stabilität des Deckelbodens an die Abmessungen der Luftfeder erfolgt dann durch eine geeignete Auswahl des Materials und der Wandstärke des Deckeleinsatzes. Das erfindungsgemäße Anschlussteil ist auch für größere Luftfedern mit einem Durchmesser von beispielsweise mehr als 0,5 Meter geeignet, bei denen der betreffende Endabschnitt des Federbalgs bislang meistens mittels eines Wulstrings an einer Deckelplatte befestigt ist.

Der Deckeleinsatz kann mit einer geringen Spielpassung oder einer leichten Presspassung zwischen dem Innenrand der Öffnung im Deckelboden und dem Außenrand des Deckeleinsatzes in die Öffnung des Deckelbodens eingesetzt sein. Dies ist deshalb möglich und vorteilhaft, weil der Deckeleinsatz bei belüfteter Luftfeder von innen an die Bördelplatte gedrückt wird, und die Deckelwand der Bördelplatte im montierten Zustand formschlüssig zwischen dem Deckeleinsatz und einem Bauteil fixiert ist, an dem die Luftfeder befestigt ist.

Die äußere Versatzhöhe hv des Absatzrandes in Bezug zur Außenwand des Deckeleinsatzes entspricht vorzugsweise der Dicke D_{DB} des Deckelbodens der Bördelplatte (hv = D_{DB}), da die Außenwände des Deckelbodens der Bördelplatte und des Deckeleinsatzes dann im montierten Zustand eine gemeinsame, für die Stabilität des Anschlussteils und die Befestigung der Luftfeder an einem anderen Bauteil günstige ebene Außenfläche bilden.

Damit der Deckeleinsatz auch im drucklosen Zustand der Luftfeder in der Öffnung der Bördelplatte gehalten wird, sind der Durchmesser do, do' der Öffnung im Deckelboden der Bördelplatte sowie der innere Innendurchmesser d_{AR_i}, d_{AR_i}', d_{AR_i}" und der Außendurchmesser d_{AR_a}, d_{AR_a}' des Absatzrandes des Deckeleinsatzes bevorzugt derart bemessen, dass der Deckeleinsatz im montierten Zustand von dem betreffenden Endabschnitt des Federbalgs am Absatzrand an den Deckelboden der Bördelplatte angedrückt wird.

Zur Vermeidung einer gesonderten Abdichtung zwischen der Bördelplatte und dem Deckeleinsatz sind die axiale Innenwand des Absatzrandes des Deckeleinsatzes und/oder die axiale Innenwand des betreffenden Endabschnittes des Federbalgs vorzugsweise als Dichtflächen ausgebildet.

Zur Gewährleistung einer sicheren Dichtigkeit der Luftfeder kann an der axialen Innenwand des betreffenden Endabschnittes des Federbalgs auch mindestens eine umlaufende Dichtlippe aus einem elastischen Material angeformt sein, welche beim Umbördeln des Deckelrandes der Bördelplatte unter elastischer und/oder plastischer Verformung an die Innenwand des Absatzrandes des Deckeleinsatzes gedrückt wird.

Der Deckeleinsatz kann wie die Bördelplatte aus einem Blech, insbesondere aus einem Stahlblech hergestellt sein. Es ist jedoch auch möglich, dass der Deckeleinsatz aus einem Leichtmetallblech oder aus einem Kunststoffmaterial hergestellt ist.

Die Wandstärke D_{DE}, D_{DE}', D_{DE}" des Deckeleinsatzes entspricht mindestens der Dicke D_{DB} des Deckelbodens der Bördelplatte (D_{DE} = D_{DB}) und kann bedarfsweise, abhängig von der Größe, insbesondere dem Durchmesser der Luftfeder sowie abhängig von dem für den Deckeleinsatz verwendeten Material, größer als die Dicke D_{DB} des Deckelbodens der Bördelplatte sein (D_{DE}' > D_{DB}, D_{DE}" > D_{DB}).

Zur weiteren Verdeutlichung der Erfindung ist der Beschreibung eine Zeichnung mit drei Ausführungsbeispielen beigefügt. In dieser zeigt
Fig. 1a, 1b, 1c Bauteile einer ersten Ausführungsform einer erfindungsgemäßen Luftfeder vor der Montage in einer ausschnittsweisen Querschnittsansicht,
Fig. 1d die Bauteile der Luftfeder gemäß den Figuren 1a, 1b, 1c nach der Montage in einer ausschnittsweisen Querschnittsansicht,
Fig. 2a, 2b, 2c Bauteile einer zweiten Ausführungsform einer erfindungsgemäßen Luftfeder vor der Montage in einer ausschnittsweisen Querschnittsansicht,
Fig. 2d die Bauteile der Luftfeder gemäß den Figuren 2a, 2b, 2c nach der Montage in einer ausschnittsweisen Querschnittsansicht,
Fig. 3a, 3b, 3c Bauteile einer dritten Ausführungsform einer erfindungsgemäßen Luftfeder vor der Montage in einer ausschnittsweisen Querschnittsansicht,
Fig. 3d die Bauteile der Luftfeder gemäß den Figuren 3a, 3b, 3c nach der Montage in einer ausschnittsweisen Querschnittsansicht.

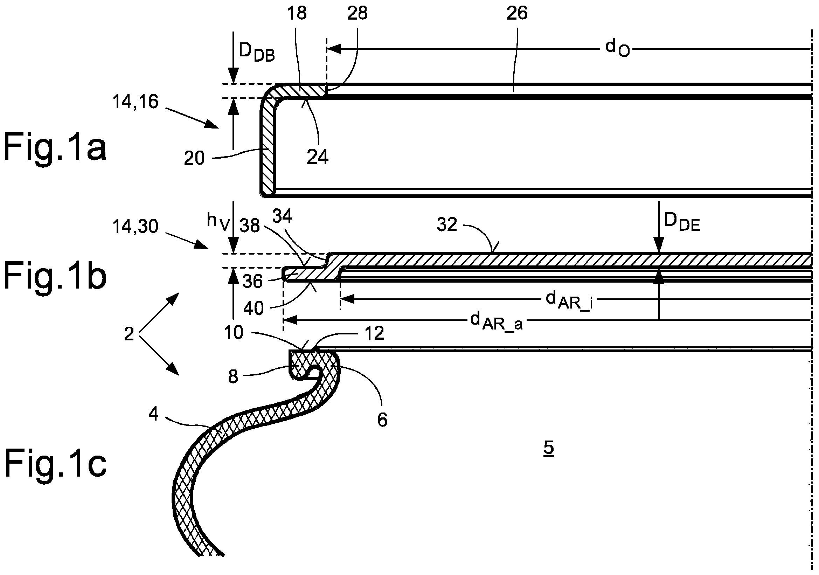

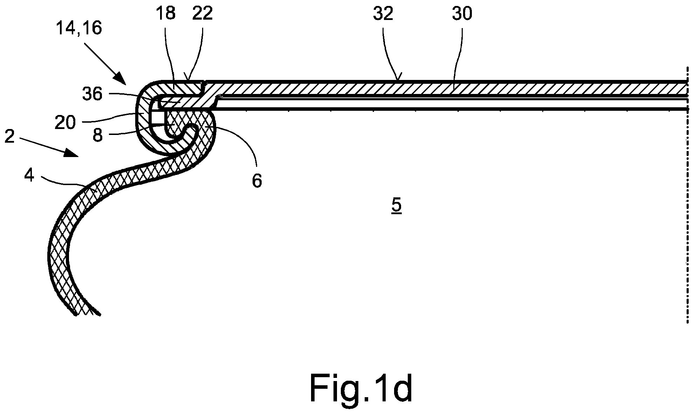

Die noch zu erläuternden Bauteile 4, 16, 30 einer ersten Ausführungsform einer erfindungsgemäßen Luftfeder 2 sind demnach im unmontierten Zustand in den Figuren 1a bis 1c und im montierten Zustand in Fig. 1d abgebildet.

Diese Luftfeder 2 weist einen schlauchförmigen Federbalg 4 aus einem elastomeren Werkstoff auf, der einen gepunktet dargestellten Innenraum 5 umschließt und an seinem oberen Endabschnitt 6 druckdicht an einem oberen Anschlussteil 14 befestigt ist. Das obere Anschlussteil 14 ist als eine vor der Montage topfförmige, aus einem Blech hergestellte Bördelplatte 16 mit einem ebenen Deckelboden 18 und einem rechtwinklig nach innen umgebogenen Deckelrand 20 ausgebildet. Bei der Montage der Luftfeder 2 wird der Deckelrand 20 unter Einschluss eines endseitigen Ringwulstes 8 des Federbalgs 4 und Andrücken des betreffenden Endabschnittes 6 an eine Dichtfläche 40 des Anschlussteils 14 torusförmig nach innen umgebördelt.

Erfindungsgemäß weist die Bördelplatte 16 in ihrem Deckelboden 18 eine zentrisch angeordnete kreisrunde Öffnung 26 auf. Im montierten Zustand ist ein kreisscheibenförmiger Deckeleinsatz 30 mit einem nach axial innen abgesetzten ringscheibenförmigen Absatzrand 36 unter Anliegen seiner axialen Außenwand 38 an der axialen Innenwand 24 des Deckelbodens 18 von axial innen formschlüssig in die Öffnung 26 des Deckelbodens 18 eingesetzt. Der Deckeleinsatz 30 ist hinsichtlich seines Materials und seiner Wandstärke D_{DE} an die Größe beziehungsweise dem Durchmesser der Luftfeder 2 angepasst. Vorliegend ist der Deckeleinsatz 30 ebenso wie die Bördelplatte 16 aus einem Stahlblech hergestellt, und die Wandstärke D_{DE} des Deckeleinsatzes 30 entspricht der Dicke D_{DB} des Deckelbodens 18 der Bördelplatte 16 (D_{DE} = D_{DB}).

Im montierten Zustand ist der Deckeleinsatz 30 mit einer geringen Spielpassung oder einer leichten Presspassung zwischen dem Innenrand 28 der Öffnung 26 im Deckelboden 18 und dem Außenrand 34 des Deckeleinsatzes 30 in die Öffnung 26 des Deckelbodens 18 eingesetzt. Die äußere Versatzhöhe hv des Absatzrandes 36 entspricht mit Bezug zur Außenwand 32 des Deckeleinsatzes 30 der Dicke D_{DB} des Deckelbodens 18 der Bördelplatte 16 (hv = D_{DB}), sodass die axialen Außenwände 22, 32 des Deckelbodens 18 der Bördelplatte 16 und des Deckeleinsatzes 30 im montierten Zustand eine gemeinsame ebene Außenfläche bilden.

Der Durchmesser d_{O} der Öffnung 26 im Deckelboden 18 der Bördelplatte 16 sowie der radial innere Innendurchmesser d_{AR_i} und der Außendurchmesser d_{AR_a} des Absatzrandes 36 des Deckeleinsatzes 30 sind derart bemessen, dass der Deckeleinsatz 30 im montierten Zustand von dem betreffenden Endabschnitt 6 des Federbalgs 4, an der axiale Innenwand 40 des Absatzrandes 36 angreifend, an den Deckelboden 18 der Bördelplatte 16 angedrückt wird.

Die axiale Innenwand 40 des Absatzrandes 36 des Deckeleinsatzes 30 und/oder die axiale Innenwand 10 des betreffenden Endabschnittes 6 des Federbalgs 4 sind daher vorteilhaft als Dichtflächen ausgebildet, wodurch einer Abdichtung zwischen der Bördelplatte 16 und dem Deckeleinsatz 30 überflüssig ist. Zur Sicherheit ist an der axialen Innenwand 10 des Endabschnittes 6 des Federbalgs 4 noch eine kreisförmige, umlaufende Dichtlippe 12 angeformt, die beim Umbördeln des Deckelrandes 20 der Bördelplatte 16 unter elastischer und/oder plastischer Verformung an die axiale Innenwand 40 des Absatzrandes 36 des Deckeleinsatzes 30 gedrückt wird.

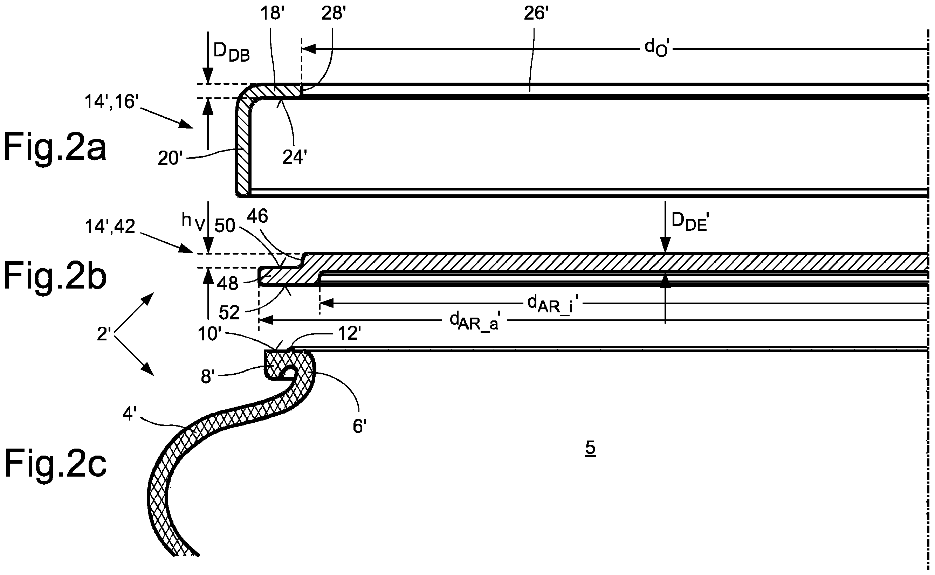

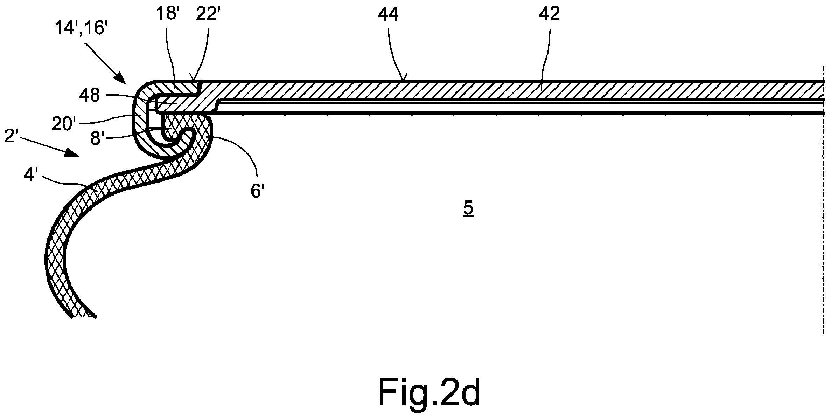

In den Figuren 2a, 2b und 2c sowie in der Figur 2d sind die genannten Bauteile 4', 16', 42 einer zweiten Ausführungsform einer erfindungsgemäßen Luftfeder 2' im unmontierten beziehungsweise montierten Zustand abgebildet. Die Luftfeder 2' mit deren Federbalg 4' und Anschlussteil 14' ist hier jedoch jetzt größer als die Luftfeder 2 gemäß den Figuren 1a bis 1d ausgebildet und weist insbesondere einen größeren Durchmesser auf. Trotz des größeren Durchmessers weist die Bördelplatte 16' am Deckelboden 18' dieselbe Dicke D_{DB} wie die Bördelplatte 16 gemäß den Figuren 1a bis 1d auf, wodurch das Umbördeln des Deckelrandes 20' bei der Montage der Luftfeder 2' mit ähnlich niedrigen Umform- und Haltekräften durchführbar ist.

Als einen weiteren Unterschied weist der Deckeleinsatz 42, der ebenfalls aus einem Stahlblech oder aus einem Leichtmetallblech hergestellt ist, eine größere Wandstärke D_{DE}' als die Dicke D_{DB} des Deckelbodens 18' der Bördelplatte 16' auf (D_{DE}' > D_{DB}), wodurch die Stabilität des Deckeleinsatzes 42 gegen ein Ausbeulen nach axial innen oder axial außen gewährleistet ist.

Auch bei dieser zweiten Ausführungsform der Luftfeder 2' ist der Deckeleinsatz 42 im montierten Zustand mit einer geringen Spielpassung oder einer leichten Presspassung zwischen dem Innenrand 28' der Öffnung 26' im Deckelboden 18' und dem Außenrand 46 des Deckeleinsatzes 42 in die Öffnung 26' des Deckelbodens 18' eingesetzt. Der Durchmesser do' der Öffnung 26' im Deckelboden 18' der Bördelplatte 16' sowie der innere Innendurchmesser d_{AR_i}' und der Außendurchmesser d_{AR_a}' des Absatzrandes 48 des Deckeleinsatzes 42 sind derart bemessen, dass im montierten Zustand der Deckeleinsatz 42 von dem Endabschnitt 6' des Federbalgs 4' am Absatzrand 48 axial anliegend an den Deckelboden 18' der Bördelplatte 16' gedrückt wird. Dabei liegt die axiale Außenwand 50 des Absatzrandes 48 des Deckeleinsatzes 42 plan an der axialen Innenwand 24' des Deckelbodens 18' der Bördelplatte 16' an.

Auch hierbei sind die axial innere Innenwand 52 des Absatzrandes 48 des Deckeleinsatzes 42 und/oder die Innenwand 10' des betreffenden Endabschnittes 6' des Federbalgs 4' als Dichtflächen ausgebildet. Zudem ist an der Innenwand 10' des Endabschnittes 6' des Federbalgs 4' ebenfalls eine umlaufende Dichtlippe 12' angeformt.

Wie die Fig. 2d veranschaulicht, bilden auch bei diesem Ausführungsbeispiel die Außenwand 22' der Bördelplatte 16' und die Außenwand 44 des Deckeleinsatzes 42 eine plane Außenseite des Anschlussteils 14'.

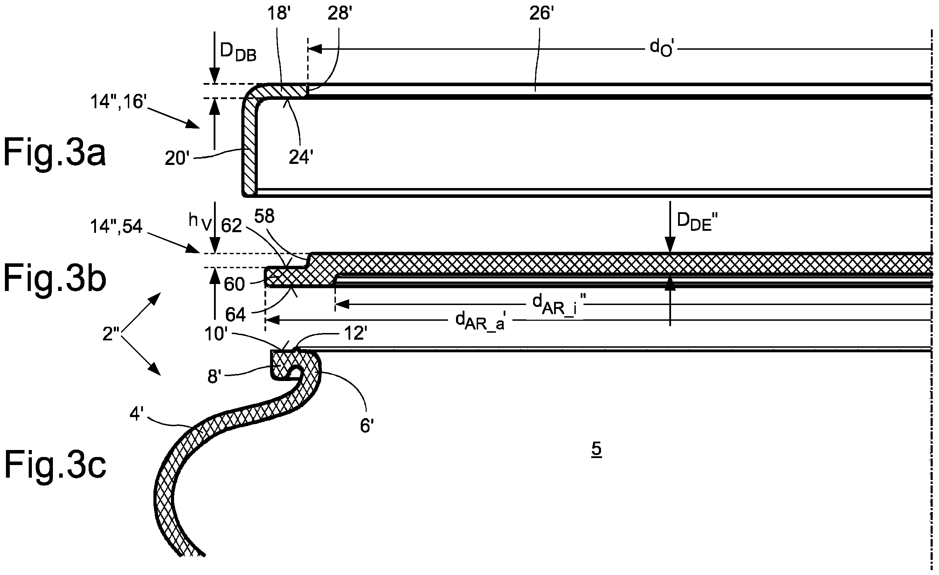

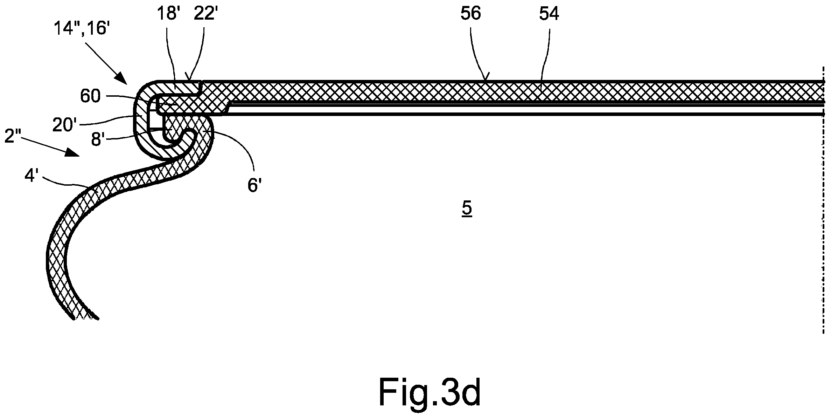

In den Figuren 3a, 3b und 3c sowie der Figur 3d sind die entsprechenden Bauteile 4', 16', 54 einer dritten Ausführungsform einer erfindungsgemäßen Luftfeder 2" im unmontierten und montierten Zustand abgebildet. Diese Luftfeder 2" weist dieselbe Größe, insbesondere denselben Durchmesser auf wie die Luftfeder 2' gemäß den Figuren 2a bis 2d. Daher ist die Bördelplatte 16' des Anschlussteils 14" identisch zu derjenigen der zweiten Ausführungsform der Luftfeder 2' ausgebildet.

Im Unterschied zu der zweiten Ausführungsform der Luftfeder 2' gemäß den Figuren 2a bis 2d ist der Deckeleinsatz 54 nun jedoch aus einem Kunststoffmaterial hergestellt und weist sowohl im Vergleich mit dem Deckeleinsatz 30 der ersten Luftfeder 2 als auch im Vergleich mit dem Deckeleinsatz 42 der zweiten Luftfeder 2' eine größere Wandstärke D_{DE}" auf (D_{DE}" > D_{DE}' > D_{DE} = D_{DB}). Durch die größere Wandstärke D_{DE}" des Deckeleinsatzes 54 ist trotz der Verwendung des weniger verformungssteifen Kunststoffmaterials die Stabilität des Deckeleinsatzes 54 gegen ein Ausbeulen nach axial innen oder axial außen gegeben.

Auch bei der dritten Ausführungsform der Luftfeder 2" ist der Deckeleinsatz 54 im montierten Zustand mit einer geringen Spielpassung oder einer leichten

Presspassung zwischen dem Innenrand 28' der Öffnung 26' im Deckelboden 18' und dem Außenrand 58 des Deckeleinsatzes 54 in die Öffnung 26' des Deckelbodens 18' eingesetzt. Der Durchmesser do' der Öffnung 26' im Deckelboden 18' der Bördelplatte 16' sowie der innere Innendurchmesser d_{AR_i}" und der Außendurchmesser d_{AR_a}' des Absatzrandes 60 des Deckeleinsatzes 54 sind derart bemessen, dass der Deckeleinsatz 54 im montierten Zustand von dem betreffenden Endabschnitt 6' des Federbalgs 4' über den Absatzrand 60 des Deckeleinsatzes 54 an den Deckelboden 18' der Bördelplatte 16' gedrückt wird. Dabei liegt die axiale Außenwand 62 des Absatzrandes 60 des Deckeleinsatzes 54 plan an der axialen Innenwand 24' des Deckelbodens 18' der Bördelplatte 16' an.

Auch bei diesem dritten Ausführungsbeispiel sind die axiale Innenwand 64 des Absatzrandes 60 des Deckeleinsatzes 54 und/oder die Innenwand 10' des betreffenden Endabschnittes 6' des Federbalgs 4' als Dichtflächen ausgebildet. Zudem ist an der Innenwand 10' des Endabschnittes 6' des Federbalgs 4' ebenfalls eine kreisförmig umlaufende Dichtlippe 12' angeformt. Schließlich ist auch dieses Anschlussteil 14" derart ausgebildet, dass die axiale Außenwand 22' des Deckelbodens 18' der Bördelplatte 16' und die Außenwand 56 des Deckeleinsatzes 54 eine plane Außenseite des Anschlussteils 14" bilden.

### Bezugszeichenliste

- 2, 2', 2": Luftfeder
- 4, 4': Federbalg; Faltenbalg
- 5: Innenraum des Federbalgs
- 6, 6': Endabschnitt des Federbalgs
- 8, 8': Ringwulst des Federbalgs
- 10, 10': Innenwand, Dichtfläche
- 12, 12': Dichtlippe
- 14, 14', 14": Anschlussteil
- 16, 16': Bördelplatte
- 18, 18': Deckelboden des Anschlussteils
- 20, 20': Deckelrand des Anschlussteils
- 22, 22': Außenwand der Bördelplatte
- 24, 24': Innenwand des Anschlussteils
- 26, 26': Öffnung im Anschlussteil
- 28, 28': Innenrand der Öffnung
- 30: Deckeleinsatz (1. Ausführungsform)
- 32: Außenwand des Deckeleinsatzes 30
- 34: Außenrand des Deckeleinsatzes 30
- 36: Absatzrand des Deckeleinsatzes 30
- 38: Außenwand des Deckeleinsatzes 30
- 40: Innenwand, Dichtfläche des Deckeleinsatzes 30
- 42: Deckeleinsatz (2. Ausführungsform)
- 44: Außenwand des Deckeleinsatzes 42
- 46: Außenrand des Deckeleinsatzes 42
- 48: Absatzrand des Deckeleinsatzes 42
- 50: Außenwand des Deckeleinsatzes 42
- 52: Innenwand, Dichtfläche des Deckeleinsatzes 42
- 54: Deckeleinsatz (3. Ausführungsform)
- 56: Außenwand des Deckeleinsatzes 54
- 58: Außenrand des Deckeleinsatzes 54
- 60: Absatzrand des Deckeleinsatzes 54
- 62: Außenwand des Deckeleinsatzes 54
- 64: Innenwand, Dichtfläche des Deckeleinsatzes 54
- do, do': Durchmesser der Öffnung in der Bördelplatte
- d_{AR_a}: Außendurchmesser des Absatzrandes 36
- d_{AR_a}': Außendurchmesser des Absatzrandes 48
- d_{AR_i}: Innendurchmesser des Absatzrandes 36
- d_{AR_i}': Innendurchmesser des Absatzrandes 48
- d_{AR_i}": Innendurchmesser des Absatzrandes 60
- D_{DB}: Dicke des Deckelbodens 18, 18'
- D_{DE}: Wandstärke des Deckeleinsatzes 30
- D_{DE}': Wandstärke des Deckeleinsatzes 42
- D_{DE}": Wandstärke des Deckeleinsatzes 54
- h_{V}: Versatzhöhe

## Patentansprüche

1. Luftfeder (2, 2', 2") mit einem schlauchförmigen, aus einem elastomeren Werkstoff bestehenden Federbalg (4, 4'), welcher an seinem oberen Endabschnitt (6, 6') druckdicht an einem oberen Anschlussteil (14, 14', 14") und mit seinem unteren Endabschnitt an einem unteren Anschlussteil befestigt ist, wobei mindestens eines der Anschlussteile (14, 14', 14") als eine vor der Montage topfförmige, aus einem Blech hergestellte Bördelplatte (16, 16') ausgebildet ist, welche einen ebenen Deckelboden (18, 18') und einen daran radial außen ausgebildeten sowie nach radial innen umgebogenen Deckelrand (20, 20') aufweist, wobei der Deckelrand (20, 20') bei der Montage der Luftfeder (2, 2', 2") unter Einschluss eines endseitigen Ringwulstes (8, 8') des Federbalgs (4, 4') und Andrücken des Endabschnittes (6, 6') an eine Dichtfläche (40, 52, 64) des Anschlussteils (14, 14', 14") torusförmig nach innen umgebördelt ist, **dadurch gekennzeichnet, dass** die Bördelplatte (16, 16') in ihrem Deckelboden (18, 18') eine zentrisch angeordnete kreisförmig Öffnung (26, 26') aufweist, dass ein kreisscheibenförmiger Deckeleinsatz (30, 42, 54) einen radial außen ausgebildeten und nach axial innen abgesetzten ringscheibenförmigen Absatzrand (36, 48, 60) aufweist, und dass der Deckeleinsatz (30, 42, 54) unter Anliegen seines Absatzrandes (36, 48, 60) an der axialen Innenwand (24, 24') des Deckelbodens (18, 18') von axial innen formschlüssig in die Öffnung (26, 26') der Bördelplatte (16, 16') eingesetzt ist.

2. Luftfeder nach Anspruch 1, **dadurch gekennzeichnet, dass** der Deckeleinsatz (30, 42, 54) hinsichtlich seines Materials und seiner Wandstärke (D_{DE}, D_{DE}', D_{DE}") an die Abmessungen der Luftfeder (2, 2', 2") angepasst ist.

3. Luftfeder nach Anspruch 1 oder 2, **dadurch gekennzeichnet, dass** der Deckeleinsatz (30, 42, 54) mit einer geringen Spielpassung oder einer leichten Presspassung zwischen dem Innenrand (28, 28') der Öffnung (26, 26') im Deckelboden (18, 18') und dem Außenrand (34, 46, 58) des Deckeleinsatzes (30, 42, 54) in die Öffnung (26, 26') des Deckelbodens (18, 18') eingesetzt ist.

4. Luftfeder nach einem der Ansprüche 1 bis 3, **dadurch gekennzeichnet, dass** die radial äußere Versatzhöhe (hv) des Absatzrandes (36, 48, 60) in Bezug zur Außenwand (32, 44, 56) des Deckeleinsatzes (30, 42, 54) der Dicke (D_{DB}) des Deckelbodens (18, 18') der Bördelplatte (16, 16') entspricht (hv = D_{DB}).

5. Luftfeder nach einem der Ansprüche 1 bis 4, **dadurch gekennzeichnet, dass** der Durchmesser (do, do') der Öffnung (26, 26') im Deckelboden (18, 18') der Bördelplatte (16, 16') sowie der innere Innendurchmesser (d_{AR_i}, d_{AR_i}',d_{AR_i}") und der Außendurchmesser (d_{AR_a}, d_{AR_a}') des Absatzrandes (36, 48, 60) des Deckeleinsatzes (30, 42, 54) derart bemessen sind, dass der Deckeleinsatz (30, 42, 54) im montierten Zustand von dem betreffenden Endabschnitt (6, 6') des Federbalgs (4, 4') am Absatzrand (36, 48, 60) an den Deckelboden (18, 18') der Bördelplatte (16, 16') angedrückt wird.

6. Luftfeder nach Anspruch 5, **dadurch gekennzeichnet, dass** die axiale Innenwand (40, 52, 64) des Absatzrandes (36, 48, 60) des Deckeleinsatzes (30, 42, 54) und/oder die axiale Innenwand (10, 10') des betreffenden Endabschnittes (6, 6') des Federbalgs (4, 4') als Dichtflächen ausgebildet sind.

7. Luftfeder nach Anspruch 6, **dadurch gekennzeichnet, dass** an der axialen Innenwand (10, 10') des betreffenden Endabschnittes (6, 6') des Federbalgs (4, 4') mindestens eine umlaufende Dichtlippe (12, 12') aus einem elastischen Material angeformt ist.

8. Luftfeder nach einem der Ansprüche 1 bis 7, **dadurch gekennzeichnet, dass** der Deckeleinsatz (30, 42) aus einem Blech hergestellt ist.

9. Luftfeder nach Anspruch 8, **dadurch gekennzeichnet, dass** der Deckeleinsatz (42) aus einem Leichtmetallblech hergestellt ist.

10. Luftfeder nach einem der Ansprüche 1 bis 7, **dadurch gekennzeichnet, dass** der Deckeleinsatz (54) aus einem Kunststoffmaterial hergestellt ist.

11. Luftfeder nach einem der Ansprüche 2 bis 10, **dadurch gekennzeichnet, dass** die Wandstärke (D_{DE}) des Deckeleinsatzes (30) mindestens der Dicke (D_{DB}) des Deckelbodens (18) der Bördelplatte (16) entspricht (D_{DE} = D_{DB}).

12. Luftfeder nach einem der Ansprüche 2 bis 10, **dadurch gekennzeichnet, dass** die Wandstärke (D_{DE}', D_{DE}") des Deckeleinsatzes (42, 54) größer als die Dicke (D_{DB}) des Deckelbodens (18') der Bördelplatte (16') ist (D_{DE}' > D_{DB}, D_{DE}" > D_{DB}).

## Claims

1. Air spring (2, 2', 2") having a tubular air spring bellows (4, 4') which is composed of an elastomer material and which at its upper end portion (6, 6') is fastened in an air-tight manner to an upper connector part (14, 14', 14") and by way of its lower end portion is fastened to a lower connector part, wherein at least one of the connector parts (14, 14', 14") prior to assembly is designed as a potshaped flange plate (16, 16') which is produced from a metal sheet and which has a flat cover base (18, 18') and a cover periphery (20, 20') which is formed radially on the outside of the latter and is bent radially inwards, wherein the cover periphery (20, 20') when assembling the air spring (2, 2', 2") is flanged inwards in the shape of a torus while enclosing an end-proximal annular bead (8, 8') of the air spring bellows (4, 4') and pressing the end portion (6, 6') onto a sealing face (40, 52, 64) of the connector part (14, 14', 14"), **characterized in that** the flange plate (16, 16') on its cover base (18, 18') has a centrically disposed circular opening (26, 26'), **in that** a circular disc-shaped cover insert (30, 42, 54) has an annular disc-shaped shoulder periphery (36, 48, 60) that is formed radially on the outside and is offset axially towards the inside, and **in that** the cover insert (30, 42, 54) is inserted into the opening (26, 26') of the flange plate (16, 16') in a form-fitting manner axially from the inside while the shoulder periphery (36, 48, 60) of said cover insert (30, 42, 54) bears on the axial internal wall (24, 24') of the cover base (18, 18').

2. Air spring according to Claim 1, **characterized in that** the cover insert (30, 42, 54) in terms of its material and its wall thickness (D_{DE}, D_{DE}', D_{DE}") is adapted to the dimensions of the air spring (2, 2', 2").

3. Air spring according to Claim 1 or 2, **characterized in that** the cover insert (30, 42, 54) is inserted into the opening (26, 26') of the cover base (18, 18') with a slight clearance fit or a slight interference fit between the internal periphery (28, 28') of the opening (26, 26') in the cover base (18, 18') and the external periphery (34, 46, 58) of the cover insert (30, 42, 54) .

4. Air spring according to one of Claims 1 to 3, **characterized in that** the radially outer height offset (hv) of the shoulder periphery (36, 48, 60) in relation to the external wall (32, 44, 56) of the cover insert (30, 42, 54) corresponds to the thickness (D_{DB}) of the cover base (18, 18') of the flange plate (16, 16') (hv = D_{DB}).

5. Air spring according to one of Claims 1 to 4, **characterized in that** the diameter (do, do') of the opening (26, 26') in the cover base (18, 18') of the flange plate (16, 16'), and the inner internal diameter (d_{AR_i}, d_{AR_i}', d_{AR_i}") and the external diameter (d_{AR_a}, d_{AR_a}') of the shoulder periphery (36, 48, 60) of the cover insert (30, 42, 54), are sized in such a manner that the cover insert (30, 42, 54) in the assembled state on the shoulder periphery (36, 48, 60) is pressed onto the cover base (18, 18') of the flange plate (16, 16') by the respective end portion (6, 6') of the air spring bellows (4, 4') .

6. Air spring according to Claim 5, **characterized in that** the axial internal wall (40, 52, 64) of the shoulder periphery (36, 48, 60) of the cover insert (30, 42, 54) and/or the axial internal wall (10, 10') of the respective end portion (6, 6') of the air spring bellows (4, 4') are designed as sealing faces.

7. Air spring according to Claim 6, **characterized in that** at least one encircling seal lip (12, 12') of an elastic material is integrally moulded on the axial internal wall (10, 10') of the respective end portion (6, 6') of the air spring bellows (4, 4').

8. Air spring according to one of Claims 1 to 7, **characterized in that** the cover insert (30, 42) is produced from a metal sheet.

9. Air spring according to Claim 8, **characterized in that** the cover insert (42) is produced from a light metal sheet.

10. Air spring according to one of Claims 1 to 7, **characterized in that** the cover insert (54) is produced from a plastics material.

11. Air spring according to one of Claims 2 to 10, **characterized in that** the wall thickness (D_{DE}) of the cover insert (30) corresponds to at least the thickness (D_{DB}) of the cover base (18) of the flange plate (16) (D_{DE} = D_{DB}).

12. Air spring according to one of Claims 2 to 10, **characterized in that** the wall thickness (D_{DE}', D_{DE}") of the cover insert (42, 54) is greater than the thickness (D_{DB}) of the cover base (18') of the flange plate (16') (D_{DE}' > D_{DB}, D_{DE}" > D_{DB}).

## Revendications

1. Ressort pneumatique (2, 2', 2") avec un soufflet de ressort (4, 4') en forme de tuyau, constitué d'un matériau élastomère, qui est fixé par sa section d'extrémité supérieure (6, 6') de manière étanche à la pression à une partie de raccordement supérieure (14, 14', 14") et par sa section d'extrémité inférieure à une partie de raccordement inférieure, au moins l'une des parties de raccordement (14, 14', 14") étant réalisée sous la forme d'une plaque de sertissage (16, 16') fabriquée en une tôle en forme de pot avant le montage, qui présente un fond de couvercle (18, 18') plan et un bord de couvercle (20, 20') réalisé radialement à l'extérieur sur celui-ci et replié radialement vers l'intérieur, le bord de couvercle (20, 20") étant réalisé lors du montage du ressort pneumatique (2, 2', 2") en incluant un bourrelet annulaire d'extrémité (8, 8') du soufflet de ressort (4, 4') et en pressant la section d'extrémité (6, 6') contre une surface d'étanchéité (40, 52, 64) de la partie de raccordement (14, 14', 14"), **caractérisé en ce que** la plaque de sertissage (16, 16') présente dans son fond de couvercle (18, 18") une ouverture circulaire (26, 26') agencée au centre, **en ce qu'**un insert de couvercle en forme de disque circulaire (30, 42, 54) présente un bord d'épaulement (36, 48, 60) en forme de disque annulaire réalisé radialement à l'extérieur et décalé axialement vers l'intérieur, et **en ce que** l'insert de couvercle (30, 42, 54) est inséré par complémentarité de forme dans l'ouverture (26, 26') de la plaque de sertissage (16, 16') en appliquant son bord d'épaulement (36, 48, 60) contre la paroi intérieure axiale (24, 24') du fond de couvercle (18, 18') axialement depuis l'intérieur.

2. Ressort pneumatique selon la revendication 1, **caractérisé en ce que** l'insert de couvercle (30, 42, 54) est adapté aux dimensions du ressort pneumatique (2, 2', 2") en ce qui concerne son matériau et son épaisseur de paroi (D_{DE}, D_{DE}', DDE").

3. Ressort pneumatique selon la revendication 1 ou 2, **caractérisé en ce que** l'insert de couvercle (30, 42, 54) est inséré dans l'ouverture (26, 26') du fond de couvercle (18, 18') avec un faible ajustement avec jeu ou un léger ajustement serré entre le bord intérieur (28, 28') de l'ouverture (26, 26') dans le fond de couvercle (18, 18') et le bord extérieur (34, 46, 58) de l'insert de couvercle (30, 42, 54).

4. Ressort pneumatique selon l'une quelconque des revendications 1 à 3, **caractérisé en ce que** la hauteur de décalage radialement extérieure (hv) du bord d'épaulement (36, 48, 60) par rapport à la paroi extérieure (32, 44, 56) de l'insert de couvercle (30, 42, 54) correspond à l'épaisseur (D_{DB}) du fond de couvercle (18, 18') de la plaque de sertissage (16, 16') (hv = D_{DB}).

5. Ressort pneumatique selon l'une quelconque des revendications 1 à 4, **caractérisé en ce que** le diamètre (do, do') de l'ouverture (26, 26') dans le fond de couvercle (18, 18') de la plaque de sertissage (16, 16') ainsi que le diamètre intérieur (d_{AR_i}, d_{AR_i}', d_{AR_i}") et le diamètre extérieur (d_{AR_a}, d_{AR_a}') du bord d'épaulement (36, 48, 60) de l'insert de couvercle (30, 42, 54) sont dimensionnés de telle sorte qu'à l'état monté, l'insert de couvercle (30, 42, 54) est pressé par la section d'extrémité concernée (6, 6') du soufflet de ressort (4, 4') sur le bord d'épaulement (36, 48, 60) contre le fond de couvercle (18, 18') de la plaque de sertissage (16, 16').

6. Ressort pneumatique selon la revendication 5, **caractérisé en ce que** la paroi intérieure axiale (40, 52, 64) du bord d'épaulement (36, 48, 60) de l'insert de couvercle (30, 42, 54) et/ou la paroi intérieure axiale (10, 10') de la section d'extrémité concernée (6, 6') du soufflet de ressort (4, 4') sont réalisées sous forme de surfaces d'étanchéité.

7. Ressort pneumatique selon la revendication 6, **caractérisé en ce qu'**au moins une lèvre d'étanchéité périphérique (12, 12') en un matériau élastique est formée sur la paroi intérieure axiale (10, 10') de la section d'extrémité concernée (6, 6') du soufflet de ressort (4, 4').

8. Ressort pneumatique selon l'une quelconque des revendications 1 à 7, **caractérisé en ce que** l'insert de couvercle (30, 42) est fabriqué à partir d'une tôle.

9. Ressort pneumatique selon la revendication 8, **caractérisé en ce que** l'insert de couvercle (42) est fabriqué à partir d'une tôle en métal léger.

10. Ressort pneumatique selon l'une quelconque des revendications 1 à 7, **caractérisé en ce que** l'insert de couvercle (54) est fabriqué dans un matériau plastique.

11. Ressort pneumatique selon l'une quelconque des revendications 2 à 10, **caractérisé en ce que** l'épaisseur de paroi (D_{DE}) de l'insert de couvercle (30) correspond au moins à l'épaisseur (D_{DB}) du fond de couvercle (18) de la plaque de sertissage (16) (D_{DE} = D_{DB}).

12. Ressort pneumatique selon l'une quelconque des revendications 2 à 10, **caractérisé en ce que** l'épaisseur de paroi (D_{DE}', D_{DE}") de l'insert de couvercle (42, 54) est supérieure à l'épaisseur (D_{DB}) du fond de couvercle (18") de la plaque de sertissage (16") (D_{DE}' > D_{DB}, D_{DE}" > D_{DB}).
